# EUROPÄISCHE PATENTSCHRIFT

(11) **EP 3 613 913 B1**
(45) Veröffentlichungstag und Bekanntmachung des Hinweises auf die Patenterteilung: **30.07.2025**
(21) Anmeldenummer: 19180858.3
(22) Anmeldetag: 18.06.2019
(51) Int. Cl.: E04B 1/84, F24D 3/16

(54) **WÄRMETRANSPORTMATERIAL MIT GUTEN SCHALLABSORPTIONSEIGENSCHAFTEN**
THERMAL TRANSPORT MATERIAL WITH GOOD NOISE INSULATION PROPERTIES
MATÉRIAU CALOPORTEUR PRÉSENTANT UNE BONNE ABSORPTION DES SONS

(30) Priorität: 24.08.2018 DE 102018120713
(43) Veröffentlichungstag der Anmeldung: 26.02.2020
(73) Patentinhaber: Carl Freudenberg KG, 69469 Weinheim (DE)
(72) Erfinder: KRAMER, Dominic, 60323 Frankfurt (DE); BECHTUM, Jochen, 69469 Weinheim (DE); WAGNER, Rudolf, Dr., 79379 Müllheim (DE); SENNE, Sarah, 68542 Heddesheim (DE); FREY, Guenter, 79418 Schliengen (DE); KATTGE, Werner, 64668 Rimbach (DE); von der MUEHLEN, Hartwig, 69121 Heidelberg (DE); HERZOG, Matthias, Dr., 79282 Ballrechten-Dottingen (DE); RODRIGUEZ CHARLES, Maria Teresa, 08225 Terrassa (ES)

(56) Entgegenhaltungen:
- EP-A1- 0 246 464
- EP-A2- 2 468 974
- DE-A1- 102009 055 440

## Beschreibung

### Technisches Gebiet

Die Erfindung betrifft ein Wärmetransportmaterial, das gleichzeitig gute Schallabsorptionseigenschaften aufweist, sowie seine Verwendung.

### Stand der Technik

Insbesondere bei modernen Gebäuden ist es auch in gemäßigten Klimazonen häufig wünschenswert, die Räume des Gebäudes zu klimatisieren indem Wärme aus dem Gebäude ab- oder diesem zugeführt wird. Dabei ist eine Wärmeabführung insbesondere für stark von Personen frequentierte und/oder mit zahlreichen elektronischen Geräten ausgestattete Räume wichtig, da diese eine nicht unerhebliche Wärmeabgabe im dreistelligen Wattbereich aufweisen. Dasselbe gilt beispielsweise für Produktionshallen, wo Maschinen und Anlagen erhebliche Wärmemengen abgeben, die aus dem Gebäude abgeführt werden müssen.

Für die Wärmeabfuhr gibt es prinzipiell unterschiedliche Möglichkeiten, wobei sich großflächige, auf dem Wärmeabstrahlungsprinzip basierende Klimatisierungselemente als besonders geeignet erwiesen haben. Zur Klimatisierung von Räumen, insbesondere zur Raumkühlung, werden dabei aus dem Stand der Technik bekannte Wärmeübertragungseinrichtungen bzw. Klimatisierungselemente eingesetzt. Solche Klimatisierungselemente eignen sich bei Umkehr der Wärmeübertragungsrichtung prinzipiell auch zur Raumheizung.

Aus dem Stand der Technik sind bereits Decken- oder Wandelemente bekannt, welche über einen an der Decke bzw. der Wand befestigbaren Rahmen mit einer Bodenplatte und einem in dem Rahmen angeordneten Heiz- oder Kühlregister verfügen. Aus der DE 20 2007 010 215 U1 ist beispielsweise eine Wand- oder Deckenverkleidung mit einem Heiz- oder Kühlregister in Form von Rohrleitungen bekannt, die an Wärmeleitprofilen befestigt sind. Die Wärmeleitprofile liegen auf der Rückseite einer durch Verkleidungsplatten gebildeten Verkleidungsfläche an. Die Verkleidungsplatten sind an Tragschienen mit U-förmigem Querschnitt befestigt. Die Tragschienen und die daran befestigten Verkleidungsplatten bilden somit einen an einer Decke oder Wand befestigbaren Rahmen mit einem von den Verkleidungsplatten gebildeten Boden. Die Wärmeleitprofile sind im Innern dieses Rahmens angeordnet und liegen an den Verkleidungsplatten an. Die Wärmeleitprofile und die daran befestigten Rohrleitungen bilden das Heiz- oder Kühlregister. Um einen guten Wärmeleitkontakt zwischen den Rohrleitungen und der Verkleidungsfläche herzustellen, sind quer zu den langgestreckten Wärmeleitprofilen Niederhalter angeordnet, welche unter Federspannung wenigstens zwei nebeneinander liegende Wärmeleitprofile an der Verkleidungsplatte anliegend halten.

Die Wärmeleitprofile weisen auf ihrer Rückseite einen etwa halbkreisförmigen Ansatz auf, in dem die Rohrleitungen angeordnet sind. Die Rohrleitungen werden je nach Anwendungszweck als Heiz- oder Kühlleitung von einem Heiz- oder Kühlmedium, wie z. B. heißem oder kaltem Wasser durchströmt. Die Wärmeleitprofile sind in der Regel aus Metall, beispielsweise aus Aluminium gefertigt. Bei den Verkleidungsplatten kann es sich beispielsweise um Gipskartonplatten oder perforierte Metallkassetten aus Stahl oder Aluminium handeln.

Um eine effizientere Wärmeübertragung zwischen dem Heiz- oder Kühlregister und dem zu heizenden oder zu kühlenden Raum zu ermöglichen schlägt die DE 10 2009 055 440 A1 ein Decken- oder Wandelement zur Befestigung an einer Decke oder einer Wand vor, wobei das Decken- oder Wandelement über einen an der Decke (bzw. der Wand) befestigbaren Rahmen mit einem Boden verfügt, in dem ein Heiz- oder Kühlregister angeordnet ist, und wobei zwischen dem Boden des Rahmens und dem Heiz- oder Kühlregister ein Vlies und eine Graphitfolie angeordnet sind. Die perforierte Graphitfolie soll einen guten Wärmekontakt zwischen dem Heiz- oder Kühlregister und der Bodenplatte des Decken- oder Wandelements sicherstellen und das Vlies soll die Schallabsorption des Decken- oder Wandelements verbessern. Bei dem Vlies wird ein Kohlefaservlies als bevorzugt dargestellt, da dieses eine hohe Wärmeleitfähigkeit aufweist. Bevorzugt handelt es sich bei dem Vlies und der darauf angeordneten perforierten Graphitfolie um einen Verbund, welcher durch Kalandrieren hergestellt werden kann.

Nachteilig an dem beschriebenen Wärmetransportmaterial ist, dass der Wärmetransport in vertikaler Richtung über das Kohlefaservlies bewerkstelligt werden muss, da die Graphitfolie nur eine flächige Wärmeleitung ermöglicht. Kohlefaservliese sind aber aus gesundheitlichen Gründen in Gebäudeanwendungen unerwünscht und preislich unattraktiv. Darüber hinaus ist bei der Verwendung einer Folie nachteilig, dass diese perforiert werden muss, um schalldurchlässig und akustisch wirksam zu werden. Hierdurch reißen Folien schnell ein und sind spröde.

Der EP 2 468 974 A2 liegt ebenfalls die Aufgabe zu Grunde eine Verbesserung der Wärmeübertragung bei Heiz- bzw. Kühlelementen zu erreichen. Hierzu schlägt diese Druckschrift einen Aufbau für ein Heiz- bzw. Kühlelement, insbesondere für eine Klimadecke vor, umfassend eine perforierte, Wärme leitende Trägerplatte, auf deren Rückseite Leitungen eines Heiz- oder Kühlregisters verlaufen, die in Wärmeleitkontakt mit der Trägerplatte stehen, wobei die Rückseite der Trägerplatte und die Heiz- bzw. Kühlleitungen von einer Abdeckbahn überdeckt sind, die eine textile oder gitterförmige Struktur hat und aus einem Wärme leitenden Material besteht oder mit einem Wärme leitenden Material beschichtet ist.

Als Abdeckbahn kann beispielsweise ein aus Graphit bestehendes bzw. mit Graphit beschichtetes Vlies Verwendung finden. Dieses Vlies weist keine besonderen akustischen Eigenschaften auf. Deshalb wird zur Verbesserung der Akustik vorgeschlagen, auf die Rückseite der Abdeckbahn zusätzlich ein Akustikvlies aufzulaminieren.

Die EP 2 191 058 B1 beschreibt eine Lage zur Verwendung in einer Metalldecke, mit einem Flächengewicht von höchstens 45 g/m², umfassend eine Fasermischung, die mit einem Anteil von höchstens 30 g/m² vorliegt und einem Flammschutzmittel, welches mit einem Anteil von höchstens 10 g/m² vorliegt. Die Lage zeigt gute akustische Eigenschaften, da sie über eine hohe und definierte Porosität verfügt. Aufgrund ihrer hohen Porosität ist die Lage jedoch nur bedingt für Anwendungen geeignet, bei denen die Wärmeleitung im Vordergrund steht.

### Darstellung der Erfindung

Der Erfindung liegt die Aufgabe zu Grunde ein Material bereitzustellen, das bei einfachem Aufbau sehr gute wärmeleitende Eigenschaften mit sehr guten akustischen Eigenschaften kombiniert und hierdurch zum Wärmetransport und Schallabsorption beispielsweise in den oben genannten Wärmeübertragungseinrichtungen eingesetzt werden kann.

Diese Aufgabe wird gelöst durch ein Wärmetransportmaterial nach Anspruch 1.

Überraschend wurde gefunden, dass mit dem erfindungsgemäßen Wärmetransportmaterial sehr gute wärmeleitende Eigenschaften mit sehr guten akustischen Eigenschaften kombiniert werden können. Das Wärmetransportmaterial kann dabei einen sehr einfachen und dünnen Aufbau aufweisen.

Der Anteil an Graphit in Bezug auf die Wärmeleitbeschichtung beträgt mehr als 50 Gew.%, beispielsweise von 50 bis 100 Gew.%, bevorzugter von 60 bis 100 Gew.%, noch bevorzugter von 70 bis 100 Gew.%, noch bevorzugter von 80 bis 100 Gew.%. Dies ist vorteilhaft, da hierdurch die wärmeleitenden Eigenschaften des textilen Flächengebildes signifikant verbessert werden können. Dementsprechend kann eine gute Wärmeleitfähigkeit so auch schon mit geringen Auftragsmengen realisiert werden. Geringe Auftragsmengen sind wiederum vorteilhaft, da hierdurch die Porosität und die Luftdurchlässigkeit des textilen Flächengebildes weniger beeinflusst werden.

Im Unterschied dazu weisen aus dem Stand der Technik bekannte Wärmeleitbeschichtungen von textilen Flächengebilden üblicherweise eine kleinere Menge an Graphit auf, da die Graphitschicht in der Regel mehr als 50 Gew.% Bindemittel enthält.

Vorteilhaft an der Verwendung einer Wärmeleitbeschichtung gegenüber Folien ist, dass sie zumindest teilweise in das textile Material eindringen kann. An einem Eindringen in das Material wiederum ist vorteilhaft, dass der Wärmetransport in Richtung der Flächennormalen verbessert wird. Dementsprechend ist die Wärmeleitbeschichtung zumindest zum Teil in das textile Flächengebilde eingedrungen.

Ein Vorteil der Wärmeleitbeschichtung gegenüber perforierten Metallblechen ist, dass auf Grund der durch sie ermöglichten schnelleren und gleichmäßigeren Verteilung von Hitze im textilen Flächengebilde eine verbesserte Verklebbarkeit erzielt werden kann.

In einer bevorzugten Ausführungsform der Erfindung wird die Einstellung des hohen Anteils an Graphit in der Wärmeleitbeschichtung dadurch erzielt, dass das textile Flächengebilde Fasern aus einem hydrophilen Fasermaterial aufweist. Ohne sich auf einen Mechanismus festzulegen, wird vermutet, dass das hydrophile Fasermaterial eine hohe Affinität und damit verbunden eine besonders gute Haftung zu dem Graphit aufweist. Dies ermöglicht es den Anteil an Bindemittel in der Wärmeleitbeschichtung und/oder zwischen Wärmeleitbeschichtung und textilem Flächengebilde sehr gering zu halten. Nichts desto trotz kann die Wärmeleitbeschichtung Bindemittel enthalten. Beispielhafte Bindemittel sind polymere Bindemittel aus der Gruppe der Acrylate, Vinylacrylate, Vinylacetate, Ethylenvinylacetate (EVA), Acrylnitrilbutadiene (NBR), Styrolbutadiene (SBR), Acrylnitrilbutadienstyrole (ABS), Vinylchloride, Ethylenvinylchloride, Polyvinylalkohole, Polyurethane, Stärkederivate, Cellulosederivate sowie deren Gemische und/oder Copolymere. Der Anteil an polymerem Bindemittel, und insbesondere an den vorgenannten polymeren Bindemitteln, in der Wärmeleitbeschichtung und/oder zwischen Wärmeleitbeschichtung und textilem Flächengebilde beträgt in einer bevorzugten Ausführungsform der Erfindung weniger als 50 Gew.%, beispielsweise von 1 bis 50 Gew.%, vorzugsweise weniger 40 Gew.%, beispielsweise von 1 bis 40 Gew.%, noch bevorzugter weniger 30 Gew.%, beispielsweise von 1 bis 30 Gew.% und insbesondere von weniger 20 Gew.%, beispielsweise von 1 bis 20 Gew.%. Vorteilhaft an der Verwendung eines nur geringen Anteils an polymerem Bindemittel oder an einem gänzlichen Verzicht auf ihn, ist ein verbessertes Brandverhalten des Materials im Brandfall sowie verbesserte akustische Eigenschaften.

In einer bevorzugten Ausführungsform der Erfindung beträgt der Anteil an Graphit, bezogen auf das Gesamtgewicht des Wärmetransportmaterials, von 10 Gew.% bis 50 Gew.%, bevorzugter von 10 Gew.% bis 35 Gew.%, noch bevorzugter von 10 Gew.% bis 20 Gew.%.

In einer weiteren bevorzugten Ausführungsform der Erfindung liegt die Wärmeleitbeschichtung in Form eines Musters auf dem textilen Flächengebilde vor. Das bedeutet, dass Bereiche der Oberfläche des textilen Flächengebildes mit der Wärmeleitbeschichtung belegt sind und andere Bereiche nicht. Dabei ist die Wärmeleitbeschichtung auch zumindest zum Teil in das textile Flächengebilde eingedrungen. Vorteilhaft an der Ausbildung eines Musters ist, dass die belegten Bereiche das Wärmetransportmaterial mit einer hohen thermischen Leitfähigkeit versehen, während die unbelegten Bereiche akustisch besonders aktiv sind, da ihre Porosität nicht durch Ausrüstung mit der Wärmeleitbeschichtung verringert wird. Das Muster kann ein geometrisches oder unregelmäßiges Muster sein. Der Oberflächenbelegungsgrad der Wärmeleitbeschichtung in Bezug auf die Oberfläche des Wärmetransportmaterials beträgt vorteilhafterweise 1 bis 95%, bevorzugt 10 bis 60%, besonders bevorzugt 30 bis 50%. In einer bevorzugten Ausführungsform weist das Muster zumindest teilweise durchgängige Linien auf, vorzugsweise mit einer Linienbreite > 0,5 mm, bevorzugt von 2,0 bis 10,0 mm, besonders bevorzugt von 4,0 bis 7,0 mm. Durch die Durchgängigkeit kann eine gute Wärmeleitfähigkeit in der Fläche des Wärmetransportmaterials erreicht werden.

In einer weiteren bevorzugten Ausführungsform weist das Muster zumindest teilweise diskrete Punkte, Stäbchen und/oder nicht durchgängige Flächen auf, bevorzugt mit einer Größe von < 100 mm², besonders bevorzugt von 1,0 bis 50 mm² und insbesondere von 2,0 bis 10 mm². Praktische Versuche haben gezeigt, dass dies zu einem schnellen Wärmetransport durch die Dicke des Materials hindurch, also senkrecht zur Ebene des textilen Flächengebildes, führt.

Das erfindungsgemäße Wärmetransportmaterial zeichnet sich ferner durch hervorragende akustische Eigenschaften aus. So weist das Wärmetransportmaterial einen Strömungswiderstand von 60 Pa*s/m bis 400 Pa*s/m, bevorzugter von 100 Pa*s/m bis 300 Pa*s/m, noch bevorzugter von 120 Pa*s/m bis 250 Pa*s/m auf. Dabei wird der Strömungswiderstand gemessen nach DIN EN 29053-A: 1993-05. Durch die Verringerung des Anteils des polymeren Bindemittels oder einen gänzlichen Verzicht auf ihn, wird der negative Einfluss der Wärmeleitbeschichtung auf die akustischen Eigenschaften des Materials reduziert. Ein vollständiges Verschließen der Oberfläche kann so verhindert werden, sodass ausreichende Porosität für eine akustische Wirksamkeit erhalten bleibt. Die Einstellung des Strömungswiderstands kann auf dem Fachmann bekannte Art und Weise, beispielsweise durch geeignete Auswahl der Fasermaterialien in Abstimmung mit den gewählten Parametern bei der Herstellung und Beschichtung des textilen Flächengebildes erfolgen. Es hat sich gezeigt, dass bei den erfindungsgemäß gewählten Strömungswiderständen eine besonders gute Schallabsorption ermöglicht wird. So beträgt der Schallabsorptionsgrad α(0) des erfindungsgemäßen Wärmetransportmaterials, gemessen im Impedanzrohr bei 1600 Hz vorzugsweise mehr als 0,55, beispielsweise von 0,55 bis 1,0, noch bevorzugter mehr als 0,60, beispielsweise von 0,6 bis 1,0, und insbesondere mehr als 0,65, beispielsweise von 0,65 bis 1,0. Bestimmt wird der Schallabsorptionsgrad gemäß DIN EN ISO 10534-1: 2001-10 mit den Parametern, die in Beispiel 2 angegeben sind.

Erfindungsgemäß bevorzugt enthält das textile Flächengebilde Fasern ausgewählt aus der Gruppe bestehend aus Glasfasern, Polyolefinen, Polyester, insbesondere Polyethylenterephthalat, Polybutylenterephthalat; Polyamid, insbesondere Polyamid 6.6 (Nylon^{®}), Polyamid 6.0 (Perlon^{®}), Aramid, Wolle, Baumwolle, Seide, Hanf, Bambus, Kenaf, Sisal, Cellulose, Soja, Flacks, Glas, Basalt, Carbon, Viskose und deren Gemischen. Erfindungsgemäß besonders bevorzugt enthält das Fasermaterial Glasfasern, Cellulose und/oder deren Gemische, insbesondere Glasfasern und Cellulose.

Das textile Flächengebilde kann auch leitfähige Fasern, z.B. Metallfasern, Keramikfasern, Carbonfasern, etc. enthalten, um die Wärmeleitfähigeit weiter zu verbessern.

Erfindungsgemäß besonders bevorzugt sind Cellulosefasern. Unter Cellulosefasern sind Fasern zu verstehen, die Cellulose, Viskose und/oder feinfaserige oder fibrillierte zellulosische Komponenten aufweisen, sogenannten Faserpulp oder Zellstoff. Besonders bevorzugt bestehen die Fasern im Wesentlichen aus den vorgenannten Komponenten, d.h. ihr Anteil beträgt mehr als 80 Gew.%.

In einer bevorzugten Ausführungsform der Erfindung enthält das textile Flächengebilde einen Anteil von mindestens 30 Gew.%, beispielsweise von 30 bis 100 Gew.%, und/oder von 30 bis 95 Gew.%, vorzugsweise von 50 bis 100 Gew.%, und/oder von 50 bis 90 Gew.%, noch bevorzugter von 60 bis 95 Gew.%, und insbesondere von 65 bis 85 Gew.% Cellulosefasern, jeweils bezogen auf die Gesamtmenge an Fasermaterial im textilen Flächengebilde.

In einer weiteren bevorzugten Ausführungsform der Erfindung enthält das textile Flächengebilde Glasfasern, vorzugsweise in einer Menge von 5 bis 80 Gew.%, noch bevorzugter von 5 bis 70 Gew.%, noch bevorzugter von 10 bis 60 Gew.%, insbesondere von 20 bis 40 Gew.%, jeweils bezogen auf die Gesamtmenge an Fasermaterial im textilen Flächengebilde. Durch den Zusatz von Glasfasern kann das textile Flächengebilde mit einer besonders hohen strukturellen Stabilität und geringem thermischen Schrumpf ausgestattet werden.

Ganz besonders bevorzugt enthält das textile Flächengebilde Cellulosefasern, vorzugsweise in einem Anteil von 30 bis 95 Gew.%, noch bevorzugter von 50 bis 90 Gew.%, insbesondere von 65 bis 85 Gew.% sowie Glasfasern, vorzugsweise in einem Anteil von 5 bis 70 Gew.%, noch bevorzugter von 10 bis 50 Gew.%, insbesondere von 15 bis 35 Gew.%, jeweils bezogen auf die Gesamtmenge an Fasermaterial im textilen Flächengebilde.

Das textile Flächengebilde könnte als Vlies, Vliesstoff, oder Papier ausgestaltet sein. Erfindungsgemäß bevorzugt wird ein Vliesstoff gemäß DIN EN ISO 9092 eingesetzt.

Zur Herstellung des Vliesstoffs kann auf dem Fachmann bekannte Weise eine Vlieslegung trocken in einem Kardierprozess, einem Nassvliesprozess oder in einem Spinnvliesprozess erfolgen. Vorzugsweise erfolgt die Vlieslegung in einem Nassvliesprozess oder Kardierprozess. Hierdurch kann eine besonders hohe Gleichmäßigkeit erzielt werden, was entscheidend für die akustischen Eigenschaften ist. Dementsprechend ist der Vliesstoff bevorzugt ein Nassvliesstoff oder ein kardierter Vliesstoff. Besonders bevorzugt erfolgt die Vlieslegung in einem Nassvliesprozess, insbesondere mit einem Schrägsieb, da hierdurch Vliesstoffe mit besonders hoher Gleichmäßigkeit erhalten werden können.

Die Fasermischung im Nassvliesprozess könnte zudem feinfaserige oder fibrillierte zellulosische Komponenten aufweisen, sogenannten Faserpulp oder Zellstoff. Diese Komponenten ermöglichen eine sehr effektive Abstimmung der akustischen Wirksamkeit des textilen Flächengebildes. In einer bevorzugten Ausführungsform ist der Vliesstoff mithin ein Nassvliesstoff, der Faserpulp, insbesondere Cellulosepulp, und/oder Zellstoff enthält, vorzugsweise in einem Anteil von mindestens 30 Gew.%, beispielsweise von 30 bis 100 Gew.% und/oder von 30 bis 95 Gew.%, vorzugsweise von 50 bis 100 Gew.%, und/oder von 50 bis 90 Gew.%, noch bevorzugter von 60 bis 95 Gew.%, und insbesondere von 65 bis 85 Gew.%, jeweils bezogen auf die Gesamtmenge an Fasermaterial im Nassvliesstoff.

Vor diesem Hintergrund ist denkbar, dass der Nassvliesstoff zwei oder mehr unterschiedliche Faserpulp- und/oder Zellstofftypen beinhaltet, die sich in ihrer Feinheit unterscheiden. Hierdurch ist eine besonders genaue Einstellung der Porosität und damit verbunden ein textiles Flächengebilde mit einem besonders wirksamen akustischen Strömungswiderstand erhältlich. Denkbar ist auch, dass der Nassvliesstoff feingemahlene synthetische Pulps, z.B. aus Viskose-, Polyolefin- und/oder Aramidfasern enthält.

Das Vlies kann auf bekannte Weise mechanisch, chemisch und/oder thermisch zum Vliesstoff verfestigt werden. Besonders bevorzugt ist die chemische Bindung mit Hilfe eines polymeren Binders. Bevorzugte Faserbindemittel sind Polyacrylate,
Polyvinylacrylate, Polystyrolacrylate, Polyvinylacetate, Polyethylenvinylacetate (EVA), Acrylnitrilbutadienkautschuk (NBR), Styrolbutadienkautschuk (SBR), Acrylnitrilbutadienstyrolkautschuk (ABS), Polyvinylchloride, Polyvinylethylenvinylchloride, Polyvinylalkohole, Polyurethane, Stärkederivate, Cellulosederivate sowie deren Copolymere und/oder Gemische. Dementsprechend ist der Vliesstoff bevorzugt ein chemisch gebundener Vliesstoff. Durch das Faserbindemittel kann das textile Flächengebilde mit einer hohen Festigkeit und einer guten Alterungsbeständigkeit erhalten werden. Die Auftragung des Faserbindemittels kann durch Imprägnieren, Besprühen oder mittels sonst üblicher Auftragsmethoden durchgeführt werden.

Das Faserbindemittel kann zusätzlich übliche Additive wie ein Flammschutzmittel, z.B. Metallhydroxide wie z.B. Aluminiumhydroxid, Diammoniumhydrogenphosphat oder andere Stickstoff und/oder Phosphor basierte Flammschutzmittel, wie z.B. Ammoniumpolyphosphate oder stickstoffhaltige Phosphorsäuresalze enthalten. Dieses kann über das Faserbindemittel in der Imprägniermischung zur Faserbindung mit eingebracht werden.

Der Anteil an Faserbindemittel inklusive der Additive im Wärmetransportmaterial beträgt vorzugsweise von 10 bis 70 Gew.%, noch bevorzugter von 20 bis 50 Gew.%, und insbesondere von 30 bis 40 Gew.% bezogen auf das Gesamtgewicht des Wärmetransportmaterials.

Das textile Flächengebilde kann zusätzlich Korrosionsschutzmittel enthalten: Kondensationsfeuchte in der Kühldeckenanwendung kann nämlich zur Schädigung der Metallelemente, z.B. Aluminiumprofile etc. führen. Der Zusatz eines Korrosionsschutzmittels kann dem entgegenwirken.

Zusätzlich kann das textile Flächengebilde antimikrobiell mit Hilfe eines bioziden Additivs ausgerüstet werden. Kondensationsfeuchte kann in der Anwendung nämlich zu einem Bakterien- und Pilzwachstum im textilen Flächengebilde führen, was mit der Ausrüstung unterbunden werden kann.

Das Flächengewicht des Wärmetransportmaterials beträgt vorzugsweise von 20 bis 100 g/m², noch bevorzugter von 40 bis 70 g/m², und insbesondere von 45 bis 60 g/m², jeweils gemessen nach ISO 9073-1. Für ein gutes Brandverhalten und gute akustische Eigenschaften empfiehlt sich ein Material mit geringen Flächengewichten, also geringem Materialeinsatz.

Die Dicke des Wärmetransportmaterials beträgt vorzugsweise von 0,1 bis 0,5 mm, noch bevorzugter von 0,15 bis 0,4 mm, und insbesondere von 0,2 bis 0,3 mm, jeweils gemessen nach ISO 9073-2. Vorteilhaft an einem dünnen Material, das gleichzeitig gute akustische Eigenschaften aufweist, ist, dass das Verarbeiten, d.h. Laminieren des Materials in perforierten Metalldecken, erleichtert wird.

Die Luftdurchlässigkeit des Wärmetransportmaterials beträgt vorzugsweise von 100 bis 3000 l/m²/s, noch bevorzugter von 200 bis 1000 l/m²/s, und insbesondere von 300 bis 700 l/m²/s, jeweils gemessen nach DIN EN ISO 9237 bei 100 Pa Luftdruck. Bei diesen Luftdurchlässigkeiten ergeben sich besonders gute akustische Eigenschaften.

Die Zugfestigkeit in mindestens einer Richtung, vorzugsweise in Maschinenrichtung, des Wärmetransportmaterials beträgt vorzugsweise von 20 bis 300 N/5cm, noch bevorzugter von 30 bis 150 N/5cm, und insbesondere von 50 bis 100 N/5cm, jeweils gemessen nach ISO 9073 bis 3.

In einer bevorzugten Ausführungsform der Erfindung ist das textile Flächengebilde metallisiert. Die Metallisierung kann beispielsweise durch einen Vakuum-Abscheideprozess, oder elektrochemische Abscheidung (Elektroplating) erfolgen. Als besonders geeignete Metalle haben sich Aluminium, Kupfer, Kupferlegierungen, Edelstahl, Gold und/oder Silber erwiesen. Besonders bevorzugt ist die Ausrüstung mit Edelstahl, da dieses dem textilen Flächengebilde eine besonders hohe Alterungsbeständigkeit verleiht. Zusätzlich kann eine Ausrüstung mit einem Korrosionsschutzmittel erfolgen.

Erfindungsgemäß weist das Wärmetransportmaterial eine Graphit enthaltende Wärmeleitbeschichtung auf. Unter "Graphit" sollen erfindungsgemäß neben Graphit im engeren Sinne auch graphitanaloge Verbindungen verstanden werden, wie insbesondere expandiertes Graphit, Graphen und hexagonales Bornitrid. In einer bevorzugten Ausführungsform ist das Graphit ausgewählt aus Graphit in Form eines Materials mit mehreren Kristallebenen und Graphen, also einem Material mit nur einer einzelnen Kristallebene. Das Graphit liegt vorzugsweise in Partikelform vor. Die mittlere Größe der Graphitpartikel kann vorzugsweise 0,5 bis 10 Mikrometer betragen, besonders bevorzugt 1 bis 3 Mikrometer. Praktische Versuche haben gezeigt, dass sich hierdurch ein guter Kompromiss auf Verarbeitbarkeit und Wärmeleitfähigkeit ergibt. Große Graphitpartikel sind vorteilhaft für eine gute Wärmeleitung, lassen sich allerdings schwieriger verarbeiten und verbleiben bevorzugt auf der Oberfläche des textilen Flächengebildes. Dies führt zu einer geringen Eindringtiefe des Graphits in das Wärmetransportmaterial was zu einer verminderten Leitfähigkeit senkrecht zur Flächenebene führt.

In einer Ausführungsform der Erfindung beträgt das Auftragsgewicht der Wärmeleitbeschichtung 1 bis 50 g/m², bevorzugt 2 bis 30 g/m², besonders bevorzugt 5 bis 15 g/m². Praktische Versuche haben gezeigt, dass auch bei einem geringen Auftragsgewicht an Graphit eine deutliche Verbesserung der Wärmeleitfähigkeit beobachten lässt. Gleichzeitig können gute akustische Eigenschaften erzielt werden, da die Porosität des Materials erhalten bleibt.

Das Aufbringen der Wärmeleitbeschichtung erfolgt bevorzugt durch eine Ausrüstung des textilen Flächengebildes mit einer wässrigen Graphitdispersion und anschließendes Trocknen.

Der Graphitdispersion kann ein Bindemittel, beispielsweise ein polymeres Bindemittel, zugesetzt sein, um die Anbindung an das textile Flächengebilde zu verbessern, z.B. Polyacrylate, Polyvinylacrylate, Polyvinylacetate, Polyethylenvinylacetate (EVA), Acrylnitrilbutadiene (NBR), Styrolbutadiene (SBR), Acrylnitrilbutadienstyrole (ABS), Vinylchloride, Ethylenvinylchloride, Polyvinylalkohole, Polyurethane, Stärkederivate, Cellulosederivate sowie deren Gemische und/oder Copolymere.

Die Graphitdispersion kann mit weiteren Additiven versetzt sein, z.B. Entschäumern, Benetzungsmitteln, Tensiden, die die Verarbeitung erleichtern, Basen und/oder Säuren zum Einstellen des pH-Werts, Flammschutzmitteln, Korrosionsschutzmitteln und/oder Bioziden. Bevorzugt wird ein Benetzungsmittel, ausgewählt aus der Gruppe bestehend aus: Glycerin, Propylenglykol, Sorbitol, Trihydroxystearin, Phospholipiden, Ethylenoxid/FettAlkoholether, Ethoxylaten des Propylenoxid mit Propylenglykol, Estern des Sorbitols und/oder des Glycerins, Alkylsulfonaten, Alkylsulfosuccinaten sowie Docusaten und deren Gemischen, eingesetzt.

Praktische Versuche haben gezeigt, dass bei einem Anteil des Benetzungsmittels bezogen auf die Gesamtmenge der Graphitdispersion im Bereich von 0,1 bis 5 Gew.%, vorzugsweise von 1 bis 4 Gew.%, insbesondere von 1,5 bis 3,5 Gew.% eine besonders gleichmäßige und homogene Benetzung sowie ein besonders gutes Eindringen in das Material erfolgt.

Die Ausrüstung kann durch alle gängigen Ausrüstungmethoden von Flächengebilden, beispielsweise durch Imprägnierung, z.B. mittels Foulard; durch Bedruckung, z.B. flächig oder Siebdruck, Rotationsschablonendruck; Kiss-coating, Rakel, etc.; Besprühen erfolgen; die Ausrüstung kann einseitig oder beidseitig erfolgen. Besonders bevorzugt ist das Belegen, beispielsweise Bedrucken, insbesondere im Siebdruck bzw. Rotationsschablonendruck. So lässt sich die Wärmeleitbeschichtung z.B. als Musterdruck auf das textile Flächengebilde aufbringen. Das Wärmetransportmaterial weist dann lokal im bedruckten Bereich eine hohe thermische Leitfähigkeit auf, während die unbedruckten Bereiche akustisch besonders aktiv sind, da ihre Porosität nicht durch Ausrüstung mit der Wärmeleitbeschichtung beeinträchtigt wird. Der Oberflächenbelegungsgrad des Wärmetransportmaterials durch die Wärmeleitbeschichtung in Form eines Musters beträgt dabei vorzugsweise 1 bis 100%, bevorzugt 10 bis 60%, besonders bevorzugt 30 bis 50%. In einer bevorzugten Ausführungsform wird die Bedruckung zumindest teilweise in Form durchgängiger Linien ausgeführt, bevorzugt mit einer Linienbreite > 0,5 mm, bevorzugt von 2,0 bis 10,0 mm, besonders bevorzugt von 4,0 bis 7,0 mm. Dies bewirkt eine schnelle Verteilung der Wärme in der Ebene des textilen Flächengebildes.

In einer weiteren bevorzugten Ausführungsform kann die Bedruckung zumindest teilweise in Form diskreter Punkte, Stäbchen und/oder nicht durchgängiger Flächen erfolgen, bevorzugt mit einer Größe von < 100 mm², besonders bevorzugt von 1,0 bis 50 mm² und insbesondere von 2,0 bis 10 mm². Praktische Versuche haben gezeigt, dass dies zu einem schnellen Wärmetransport durch die Dicke des Materials hindurch, also senkrecht zur Ebene des textilen Flächengebildes, führt.

Das Trocknen kann durch alle gängigen Trocknungsarten erfolgen, z.B. Kontakttrocknung mit einem Walzentrockner, Umluft- oder Durchlufttrockung mit einem Bandtrockner; IR- oder Mikrowellentrocknung etc. Bevorzugt ist die Durchlufttrockung, um die Porosität des Materials und damit die guten akustischen Eigenschaften zu erhalten. Das Material kann zusätzlich durch Kompressionswalzen nachbehandelt werden, um den Kontakt der Graphitpartikel untereinander und damit die Wärmeleitfähigkeit des Materials weiter zu verbessern.

In einer bevorzugten Ausführungsform der Erfindung weist das Wärmetransportmaterial eine zusätzliche, vorzugsweise diskontinuierliche Haftmassenbeschichtung auf. Vorzugsweise besteht die Haftmassenbeschichtung aus einem Schmelzkleber. Vorteilhaft an der Diskontinuierlichkeit der Haftmassenbeschichtung ist, dass sie die akustische Wirksamkeit des Wärmetransportmaterials nicht wesentlich beeinträchtigt. Das Aufbringen der Haftmassenbeschichtung kann beispielsweise durch das Aufstreuen eines Schmelzkleberpulvers auf das Wärmetransportmaterial und eine anschließende thermische Fixierung auf dem Wärmetransportmaterial erfolgen. Der Schmelzkleber weist vorteilhaft einen Schmelzpunkt < 125°C auf.

Das Flächengewicht der Haftmassenbeschichtung beträgt vorzugsweise von 5 bis 50 g/m², noch bevorzugter von 10 bis 40 g/m², besonders bevorzugt 12 bis 25 g/m².

Die Haftmassenbeschichtung besteht vorzugsweise im Wesentlichen aus einem thermoplastisches Polymer, z.B. einem weitgehend amorphen Polyester oder Copolyester, einem Polyamid oder Copolyamid, einem Polyurethan, einem Polyolefin, Polyethylen-vinylacetat und/oder Gemischen, Copolymeren oder Terpolymeren hiervon. Dabei ist unter "im Wesentlichen" ein Anteil von mindestens 70 Gew.%, vorzugsweise mehr als 80 Gew.%, bezogen auf die Gesamtmasse der Haftmassenbeschichtung zu verstehen.

Die Haftmassenbeschichtung kann zusätzlich mit wärmeleitfähigen Additiven ausgerüstet sein, z.B. durch Compoundierung des thermoplastischen Polymers mit wärmeleitfähigen Füllstoffen (z.B. Ruß, Graphit, Metallpulvern, Metalloxiden, Bornitrid, keramischen Verbindungen etc.), um die Wärmeleitfähigkeit des erfindungsgemäßen Wärmetransportmaterials weiter zu erhöhen.

Wird die Haftmassenbeschichtung in Form eines Pulvers auf das textile Flächengebilde aufgebracht, so kann das Pulver als Mischung mit anderen wärmeleitfähigen Pulvern (z.B. Metallpulvern, feinen Metallkugeln, Metalloxidpulvern, keramischen Pulvern etc.) verarbeitet werden, um die Wärmeleitfähigkeit des Wärmetransportmaterials weiter zu erhöhen. Die Haftmassenbeschichtung kann auch einen keramischen Reaktivkleber, der beispielsweise reaktive Silan-Gruppen aufweist, enthalten.

Das erfindungsgemäße Wärmetransportmaterial eignet sich hervorragend zum Wärmetransport und gleichzeitiger Schallabsorption in Decken- und/oder Wandelementen, insbesondere umfassend einen an der Decke und/oder der Wand befestigbaren Rahmen mit einem Boden, in dem ein Heiz- und/oder Kühlelement angeordnet ist. Dabei ist das erfindungsgemäße Wärmetransportmaterial vorzugsweise zwischen dem Boden des Rahmens und dem Heiz- oder Kühlelement angeordnet.

Die Decken- und/oder Wandelemente könnten in abgehängten, perforierten und/oder geschlitzten Metalldecken- und/oder Wandsystemen (u.a. auch in Holz- oder Gipskartondecken) verwendet werden. Ebenfalls denkbar ist der Einsatz des erfindungsgemäßen Wärmetransportmaterials im Aufbau von Doppelböden.

Im Folgenden wird die Erfindung anhand mehrerer Beispiele näher erläutert.

### Beispiel 1: Herstellung eines erfindungsgemäßen Wärmetransportmaterials

Für die Herstellung eines erfindungsgemäßen Wärmetransportmaterials wird zunächst ein textiles Flächengebilde in Form eines Nassvliestoffs hergestellt. Das Flächengewicht des Nassvliestoffs beträgt insgesamt 48 g/m². Dabei weist das textile Flächengebilde eine Fasermischung aus 70 Gew.% Zellstoff und 30 Gew.% Glasfasern auf. Die Fasermischung trägt mit insgesamt 25 g/m² zum Flächengewicht des textilen Flächengebildes bei. Desweiteren weist das textile Flächengebilde ein Faserbindemittel aus Polyacrylat-Binder und Flammschutzmittel mit einem Flächengewichtsbeitrag von 23 g/m² auf.

Zur Herstellung der Wärmeleitbeschichtung wird eine kommerziell erhältliche Graphitdispersion mit mittlerem Partikeldurchmesser von 2,5 Mikrometern sowie einem Feststoffanteil von 18 Gew.% verwendet. Der Auftrag erfolgt mittels Rotationsschablonendruck und anschließender Trocknung im Durchluftofen. Als Schablonenmuster wird ein rechtwinkliges Rautenmuster gewählt. Die mittlere Breite der bedruckten Linien auf dem Nassvliestoff beträgt 5,0 mm, die Oberflächenbelegung durch die Wärmeleitbeschichtung beträgt 52%. Der Anteil von Graphit an der Wärmeleitbeschichtung, gemessen nach Beispiel 4, beträgt 80 Gew.%, was einem Anteil von 14 Gew.% in Bezug auf das Gesamtgewicht des Wärmetransportmaterials entspricht.

Das erhaltene Wärmetransportmaterial weist ein Gesamtgewicht von 57 g/m², eine Dicke von 0,23 mm, eine Zugfestigkeit in Maschinenrichtung von 65 N/5cm, eine Luftdurchlässigkeit bei 100 Pa von 550 l/m²/s und einen Strömungswiderstand von 190 Pa*s/m auf.

### Beispiel 2: Bestimmung des Schallabsorptionsgrads des Wärmetransportmaterials

Für Untersuchungen im Impedanzrohr wird das Wärmetransportmaterial mit einer Haftmassenbeschichtung ausgerüstet. Die Haftmasse besteht aus epsilon-Polycaprolacton, das als gemahlenes Pulver mit einer mittleren Korngröße von 150 Mikrometer auf das Wärmetransportmaterial aufgepudert und im Ofen angesintert wird. Die Autragsmenge beträgt dabei 15 g/m².

Das mit der Haftmassenbeschichtung ausgerüstete Wärmetransportmaterial wird anschließend auf gelochtes, lackiertes Stahlblech mit einer Dicke von 0,5 mm, einem Lochflächenanteil von 15% und einem Durchmesser der Perforationen von 2,3 mm aufgebügelt. Der Schallabsorptionsgrad wird am Verbundmaterial bestimmt und α(0) bei einer Frequenz von 1600 Hz angegeben.

Es wird dabei ein Schallabsorptionsgrad bei 1600 Hz von α(0) = 0,7 bestimmt.

### Beispiel 3: Bestimmung der Wärmeleitfähigkeit des Wärmetransportmaterials

Es wird die Wärmeleitfähigkeit des Wärmetransportmaterials im Vergleich zum textilen Flächengebilde ohne Wärmeleitbeschichtung untersucht. Die Messungen erfolgen mittels Plattenmethode gemäß DIN 52612 an 6-fach gestapelten Prüfkörpern sowie nach der Hotdisk-Methode einlagig gemäß ISO 22007-2.2:2008, Part 2.

| Methode Wärmeleitfähigkeit | Einheit | Textiles Flächengebilde | Wärmetransportmaterial |
|---|---|---|---|
| Plattenmethode | W/(K*m) | 0,06 | 0,08 |
| Hotdisk | W/(K*m) | 0,06 | 0,09 |

### Beispiel 4: Qualitative und quantitative Bestimmung des Graphits

Eine qualitative Identifikation des Graphits wird mittels Röntgenwinkelstreuung (XRD) gemäß DIN EN 13925-2 2003-07durchgeführt. Dazu werden Röntgendiffraktogramme des Wärmetransportmaterials mit CoKα-Strahlung bei 40 kV und 35 mA im Winkelbereich 5° bis 60° (2 Theta) aufgenommen. Eine eindeutige Identifikation kann über die scharfen Reflexe bei 30,78° (3,37Å); 49,69° (2,13Å); 52,19° (2,04Å); 64,37° (1,68Å); 93,21° (1,23Å) erfolgen. Eine quantitative Bestimmung des Anteils an Graphit im Wärmetransportmaterial oder der Wärmeleitbeschichtung kann mittels thermogravimetrischer Analyse (TGA) gemäß DIN EN ISO 11358 2014-10 erfolgen. Die Probe wird zuerst in einer inerten Stickstoffatmosphäre bis 1000°C erhitzt und wieder auf 300°C abgekühlt. Anschließend wird die Probe unter Sauerstoff wieder auf 1000°C erhitzt. Bei dieser letzten Verbrennungsstufe kommt es zur Verbrennung des Graphits sowie (falls vorhanden) des Rußes. Dabei verbrennt Ruß in einem Temperaturbereich von 380°C bis 700°C und Graphit bei Temperaturen > 700°C. Sollte die Verbrennung des Rußes nicht vollständig von der des Graphits getrennt sein, dient zur Festlegung der auszuwertenden Temperaturbereiche die Ableitung der Thermogravimetrie-Kurve, welche dann bei 700°C einen Umkehrpunkt zeigt.

## Patentansprüche

1. Wärmetransportmaterial mit einem Strömungswiderstand von 60 Pa*s/m bis 400 Pa*s/m, bevorzugter von 100 Pa*s/m bis 300 Pa*s/m, noch bevorzugter von 120 Pa*s/m bis 250 Pa*s/m, welches ein textiles Flächengebilde aufweist sowie eine Graphit enthaltende Wärmeleitbeschichtung, wobei das Graphit in einem Anteil von 5 Gew.% bis 50 Gew.%, bezogen auf das Gesamtgewicht des Wärmetransportmaterials, enthalten ist, wobei der Anteil an Graphit in Bezug auf die Wärmeleitbeschichtung mehr als 50 Gew.% beträgt **.dadurch gekennzeichnet, dass** die Wärmeleitbeschichtung zumindest zum Teil in das textile Flächengebilde eingedrungen ist.

2. Wärmetransportmaterial nach Anspruch 1, **dadurch gekennzeichnet, dass** die Wärmeleitbeschichtung ein polymeres Bindemittel aufweist, wobei der Anteil an polymerem Bindemittel in der Wärmeleitbeschichtung weniger als 40 Gew.% beträgt.

3. Wärmetransportmaterial nach Anspruch 1 oder 2, **dadurch gekennzeichnet, dass** das textile Flächengebilde Fasern aus einem hydrophilen Fasermaterial aufweist.

4. Wärmetransportmaterial nach einem oder mehreren der vorangehenden Ansprüche, **dadurch gekennzeichnet, dass** die Wärmeleitbeschichtung in Form eines Musters auf dem textilen Flächengebilde vorliegt.

5. Wärmetransportmaterial nach Anspruch 4, **dadurch gekennzeichnet, dass** das Muster zumindest teilweise durchgängige Linien aufweist.

6. Wärmetransportmaterial nach einem oder mehreren der vorangehenden Ansprüche, **dadurch gekennzeichnet, dass** das Auftragsgewicht der Wärmeleitbeschichtung 1 bis 50 g/m² beträgt.

7. Wärmetransportmaterial nach einem oder mehreren der vorangehenden Ansprüche, **dadurch gekennzeichnet, dass** das Graphit in Partikelform mit einer mittleren Partikelgröße von 0,5 bis 10 µm vorliegt.

8. Wärmetransportmaterial nach einem oder mehreren der vorangehenden Ansprüche, **gekennzeichnet durch** einen Schallabsorptionsgrad, gemessen im Impedanzrohr bei 1600 Hz, von mehr als 0,55.

9. Wärmetransportmaterial nach einem oder mehreren der vorangehenden Ansprüche, **dadurch gekennzeichnet, dass** das textile Flächengebilde einen Anteil von mindestens 30 Gew.% Cellulosefasern, bezogen auf die Gesamtmenge an Fasermaterial im textilen Flächengebilde, enthält.

10. Wärmetransportmaterial nach einem oder mehreren der vorangehenden Ansprüche 1-8, **dadurch gekennzeichnet, dass** das textile Flächengebilde Glasfasern in einem Anteil von 5 bis 80 Gew.%, bezogen auf die Gesamtmenge an Fasermaterial im textilen Flächengebilde, enthält.

11. Wärmetransportmaterial nach einem oder mehreren der vorangehenden Ansprüche, **dadurch gekennzeichnet, dass** das textile Flächengebilde ein Nassvliesstoff oder ein kardierter Vliesstoff ist.

12. Wärmetransportmaterial nach einem oder mehreren der vorangehenden Ansprüche, **gekennzeichnet durch** ein Flächengewicht von 20 bis 100 g/m² und/oder durch eine Dicke von 0,1 bis 0,5 mm und/oder durch eine Luftdurchlässigkeit von 100 bis 3000 l/m²/s.

13. Wärmetransportmaterial nach einem oder mehreren der vorangehenden Ansprüche, **dadurch gekennzeichnet, dass** es einen Schmelzkleber in Form einer vorzugsweise diskontinuierlichen Haftmassenbeschichtung aufweist.

14. Verwendung eines Wärmetransportmaterial nach einem oder mehreren der vorangehenden Ansprüche zum Wärmetransport und gleichzeitiger Schallabsorption in Decken- und/oder Wandelementen, vorzugsweise umfassend einen an der Decke und/oder der Wand befestigbaren Rahmen mit einem Boden, in dem ein Heiz- und/oder Kühlelement angeordnet ist.

## Claims

1. Heat transport material having a flow resistance of 60 Pa*s/m to 400 Pa*s/m, more preferably from 100 Pa*s/m to 300 Pa*s/m, more preferably still from 120 Pa*s/m to 250 Pa*s/m, which comprises a sheetlike textile structure and a graphite-containing heat-conducting coating, wherein the graphite is contained in a fraction of 5% to 50%, by weight, based on the total weight of the heat transport material, wherein the fraction of graphite in relation to the heat-conducting coating is more than 50% by weight, **characterized in that** the heat-conducting coating has at least partly penetrated into the sheetlike textile structure.

2. Heat transport material according to Claim 1, **characterized in that** the heat-conducting coating comprises a polymeric binder, wherein the fraction of polymeric binder in the heat-conducting coating is less than 40% by weight.

3. Heat transport material according to Claim 1 or 2, **characterized in that** the sheetlike textile structure comprises fibres composed of a hydrophilic fibre material.

4. Heat transport material according to one or more of the preceding claims, **characterized in that** the heat-conducting coating is in the form of a pattern on the sheetlike textile structure.

5. Heat transport material according to Claim 4, **characterized in that** the pattern comprises at least partially continuous lines.

6. Heat transport material according to one or more of the preceding claims, **characterized in that** the applied weight of the heat-conducting coating is 1 to 50 g/m².

7. Heat transport material according to one or more of the preceding claims, **characterized in that** the graphite is in particle form with an average particle size of 0.5 to 10 µm.

8. Heat transport material according to one or more of the preceding claims, **characterized by** a sound absorption coefficient, measured in an impedance tube at 1600 Hz, of more than 0.55.

9. Heat transport material according to one or more of the preceding claims, **characterized in that** the sheetlike textile structure contains a fraction of at least 30% by weight of cellulose fibres, based on the total amount of fibre material in the sheetlike textile structure.

10. Heat transport material according to one or more of the preceding Claims 1-8, **characterized in that** the sheetlike textile structure contains glass fibres in a fraction of 5% to 80% by weight, based on the total amount of fibre material in the sheetlike textile structure.

11. Heat transport material according to one or more of the preceding claims, **characterized in that** the sheetlike textile structure is a wetlaid nonwoven fabric or a carded nonwoven fabric.

12. Heat transport material according to one or more of the preceding claims, **characterized by** a surface weight of 20 to 100 g/m² and/or by a thickness of 0.1 to 0.5 mm and/or by an air permeability of 100 to 3000 l/m²/s.

13. Heat transport material according to one or more of the preceding claims, **characterized in that** it comprises a hotmelt adhesive in the form of a preferably discontinuous coating of adhesive compound.

14. Use of a heat transport material according to one or more of the preceding claims for heat transport and simultaneous sound absorption in ceiling and/or wall elements, preferably comprising a frame which can be fastened to the ceiling and/or the wall and has a bottom in which a heating and/or cooling element is arranged.

## Revendications

1. Matériau caloporteur présentant une résistance à l'écoulement de 60 Pa*s/m à 400 Pa*s/m, plus préférablement de 100 Pa*s/m à 300 Pa*s/m, encore plus préférablement de 120 Pa*s/m à 250 Pa*s/m, qui comporte une structure plane textile ainsi qu'un revêtement thermoconducteur contenant du graphite, le graphite étant présent en une proportion de 5 % en poids à 50 % en poids, sur la base du poids total du matériau caloporteur, la proportion de graphite par rapport au revêtement thermoconducteur étant supérieure à 50 % en poids, **caractérisé en ce que** le revêtement thermoconducteur a pénétré au moins en partie dans le textile.

2. Matériau caloporteur selon la revendication 1, **caractérisé en ce que** le revêtement thermoconducteur présente un liant polymère, la proportion de liant polymère dans le revêtement thermoconducteur étant inférieure à 40 % en poids.

3. Matériau caloporteur selon la revendication 1 ou 2, **caractérisé en ce que** la structure plane textile présente des fibres provenant d'un matériau fibreux hydrophile.

4. Matériau caloporteur selon l'une ou plusieurs des revendications précédentes, **caractérisé en ce que** le revêtement thermoconducteur se présente sous la forme d'un motif sur la struture plane textile.

5. Matériau caloporteur selon la revendication 4, **caractérisé en ce que** le motif présente des lignes au moins partiellement continues.

6. Matériau caloporteur selon l'une ou plusieurs des revendications précédentes, **caractérisé en ce que** le poids d'application du revêtement thermoconducteur est de 1 à 50 g/m².

7. Matériau caloporteur selon l'une ou plusieurs des revendications précédentes, **caractérisé en ce que** le graphite se présente sous forme de particules ayant une taille moyenne de particule de 0,5 à 10 µm.

8. Matériau caloporteur selon l'une ou plusieurs des revendications précédentes, **caractérisé par** un coefficient d'absorption des sons, mesuré dans le tube d'impédance à 1 600 Hz, supérieur à 0,55.

9. Matériau caloporteur selon l'une ou plusieurs des revendications précédentes, **caractérisé en ce que** la structure plane textile contient une proportion d'au moins 30 % en poids de fibres de cellulose, par rapport à la quantité totale de matériau fibreux dans la structure plane textile.

10. Matériau caloporteur selon l'une ou plusieurs des revendications précédentes 1 à 8, **caractérisé en ce que** la structure plane textile contient des fibres de verre dans une proportion de 5 à 80 % en poids, par rapport à la quantité totale de matériau fibreux dans la structure plane textile.

11. Matériau caloporteur selon l'une ou plusieurs des revendications précédentes, **caractérisé en ce que** la structure plane textile est un non-tissé par voie humide ou un non-tissé cardé.

12. Matériau caloporteur selon l'une ou plusieurs des revendications précédentes, **caractérisé par** un grammage de 20 à 100 g/m² et/ou par une épaisseur de 0,1 à 0,5 mm et/ou par une perméabilité à l'air de 100 à 3 000 1/m²/s.

13. Matériau caloporteur selon l'une ou plusieurs des revendications précédentes, **caractérisé en ce qu'**il présente un adhésif thermofusible sous la forme d'un revêtement constitué d'une matière adhésive, de préférence discontinu.

14. Utilisation d'un matériau caloporteur selon l'une ou plusieurs des revendications précédentes pour le transport de chaleur et l'absorption des sons simultanée dans des éléments de plafond et/ou de mur, comprenant de préférence un cadre pouvant être fixé au plafond et/ou au mur, comportant une base, dans lequel est disposé un élément de chauffage et/ou de refroidissement.
